# EUROPEAN PATENT SPECIFICATION

(11) **EP 1 863 230 B1**
(45) Date of publication and mention of the grant of the patent: **16.05.2012**
(21) Application number: 05817809.6
(22) Date of filing: 05.12.2005
(51) Int. Cl.: H04L 12/56, H04L 12/46

(54) **A METHOD FOR IMPLEMENTING ON-RING PROCESS, OFF-RING PROCESS AND DATA FORWARDING IN RESILIENCE PACKET DATA RINGNET AND A NETWORK DEVICE THEREOF**
VERFAHREN ZUR IMPLEMENTIERUNG EINES ON-RING-PROZESSES, OFF-RING-PROZESSES UND DATENWEITERLEITUNG IN EINEM NACHGIEBIGEN PAKETDATENRINGNETZ UND NETZWERKEINRICHTUNG DAFÜR
PROCÉDÉ DE MISE EN OEUVRE D'UN PROCESSUS EN ANNEAU, D'UN PROCESSUS HORS ANNEAU ET DE TRANSFERT DE DONNÉES DANS UN RÉSEAU ANNULAIRE DE DONNÉES EN PAQUETS À RÉSILIENCE ET DISPOSITIF EN RÉSEAU IDOINE

(30) Priority: 25.03.2005 CN 200510056768; 01.04.2005 CN 200510059789
(43) Date of publication of application: 05.12.2007
(73) Proprietor: Hangzhou H3C Technologies Co., Ltd., Hangzhou City, Zhejiang Province 310053 (CN)
(72) Inventor: YU, Yang, Huawei Hangzhou Manufacturing Base, Hangzhou City, Zhejiang Province 310053 (CN); WANG, Wei, Huawei Hangzhou Manufacturing Base, Hangzhou City, Zhejiang Province 310053 (CN)
(74) Representative: Kopf, Korbinian Paul
(86) International application number: PCT/CN2005/002087
(87) International publication number: WO 2006/099786

(56) References cited:
- WO-A1-2004/036836
- WO-A1-2004/068788
- WO-A1-2005/027427
- CN-A- 1 581 789
- US-A1- 2003 074 469
- US-A1- 2004 170 184
- US-A1- 2004 170 184

## Description

### Field of the Invention

The present invention relates to a technology for implementing an L2/L3 compatible Resilient Packet Ring (RPR) network, and particularly to an inserting and copying processing method and a network apparatus for implementing an L2/L3 compatible RPR network, and a data forwarding method for a dual-home network based on RPR.

### Background of the Invention

With the gradual establishment of the broadband value chain and the broadband service operation mode, the broadband service is becoming a focus for service providers to expand their service fields, increase their income and enhance their competitive power. MAN(Metropolitan Area Network) apparatus which fit for broadband service play a more and more important role in practical applications.

The conventional solution for MAN is mainly SDH (Synchronous Digital Hierarchy) or the Ethernet, and the respective advantages and disadvantages of these two approaches have been broadly discussed.

An SDH ring network may meet the communication demand of users with its high reliability. It also may provide protection and fast restoration mechanism. But it also has disadvantages due to its design goal of point-to-point and circuit switching: 1. The bandwidth is fixedly allocated and reserved in a point-to-point link between stations. 2. The bandwidth can not be changed according to practical traffic in the network, which is disadvantageous for high-efficient bandwidth utilization. 3. The bandwidth is wasted due to multiple unicast messages split from a broadcast message or a multicast message. 4. 50% of the bandwidth is reserved for a protection mechanism in general, thus a flexible selection mechanism can not be provided.

Although the Ethernet has many characteristics such as low-cost, simple, easy to extend and convenient for transmission and processing of IP (Internet Protocol) packet, it still has difficulties in aspects of scale, end-to-end service establishment, quality of service (QoS), reliability and so on.

Integrating the intelligent feature of an IP network, the economical feature of the Ethernet, and the high-efficient bandwidth utilization and reliability of an optical fiber ring network, RPR is an ideal networking solution for broadband IP MAN operators. RPR makes it possible for an operator to provide telecommunication-level services in an MAN with low cost, offering network reliability of SDH level with lower transmission cost. Different from the conventional Ethernet, with the telecommunication-level reliability, RPR not only processes data-oriented service transmission requirements but also forms an integrated transmission solution capable of multi-service transmission. In short, RPR is a product of the combination of IP technology and optical network technology, which is derived from the demands of users on the development of IP services, conforms with the newest technical trend and presents a low-cost and high-quality solution for building an IP MAN.

Similar to the SDH topological structure, RPR has a reciprocal dual-ring topological structure. While the difference is that both of the two rings of RPR may transmit data. The ring near the exterior is called outer ring, and the ring near the interior is called inner ring. Data are transmitted clockwise on the outer ring, while anti-clockwise on the inner ring. Both the outer ring and the inner ring both transmit data packets and control packets. The control packets on the inner ring carry the control information of the data packets on the outer ring, and vice versa.

Cooperating with a ring, a station performs various data operations. Common basic data operations are:

Insert: it is the process that station apparatus inserts packets forwarded from other interfaces into a data stream of an RPR ring, which is an operation for loading a station traffic on the RPR ring for the first time.

Copy: it is the process that station apparatus receives data from a data stream of an RPR ring and gives them to an upper layer protocol of the station for corresponding processing, which corresponds to a case in which the RPR station is a destination station of a traffic.

Transit: it is the process that data stream passing a station is forwarded to a next station, which corresponds to a case in which the RPR station is not a destination station of a traffic.

Strip: it is the process that data passing a station is stopped from being further forwarded, which corresponds to a case in which the RPR station is a destination station of a traffic or TTL (Time To Live) of the station traffic expires.

The RPR ring may automatically discover how many stations are on the ring, the MAC (Media Access Control) addresses of the stations and the position relationship between the stations. The technique is called automatic topology discovery.

RPR automatic topology discovery is accomplished by a topology discovery control message. A station periodically transmits a topology message on the outer ring carrying its station identity (MAC address, which is also called source station information) and its station information domain (including a station MAC address, a ring identity, a Wrap identity etc.), and on receiving this topology discovery message, other stations on the ring add their own station information to a posterior part of the message and transmit the message to a next station. When the message comes back to the source station (the source station is the same as this station itself), the station will extract the information of all the stations orderly and generate a topology information table.

During a process for transmitting the topology message, the topology message will round on the inner ring and come back to the outer ring if it encounters a ring-wrap station. The stations on the way only forward the topology packet without adding any station information into it and reduce the control TTL domain before it comes back to the outer ring. A new topology is a main/important basis for station traffic path selection. If the topology is updated, the optimal path towards the ring station may be changed, and the station needs to adjust the selected ring for traffic for optimal bandwidth utilization on the ring. To avoid a sudden topology change due to certain reasons, the RPR protocol defines that the topology table may be updated only after two copies of identical topology tables inconsistent with the current topology table are continuously received. In general, the topology discovery periodically occurs and the period may be adjusted. The topology discovery also occurs as required, such as manual commands, switching actions and so on.

According to different source addresses and destination addresses of traffic forwarding, it may be classified into two modes: Local Forwarding and Remote Forwarding. These two modes may respectively be classified into known unicast forwarding, unknown unicast forwarding, multicast forwarding and broadcast forwarding. Hereinafter, the Local Forwarding mode of RPR is described.

(1) Local known unicast forwarding

The known unicast forwarding of the Local Forwarding mode refers to both an initiator and a terminator of an inserted traffic are stations on a ring, i.e., the traffic is initiated by a L3 switch or router directly connected with the ring. Both a source MAC address and a destination MAC address of the traffic are ring station MAC addresses. In this case, it demands that an apparatus connecting with the RPR station is an L3 apparatus, i.e., an L3 ring network of RPR, so this kind of forwarding is called L3 forwarding.

In this case, an IEEE 802.3 Ethernet data frame transmitted from the L3 switch needs to be converted into a new frame in IEEE 802.17 RPR MAC format for transmitting on the ring. On arriving at the destination RPR station, the frame will be converted into the original IEEE 802.3 Ethernet data frame format again.

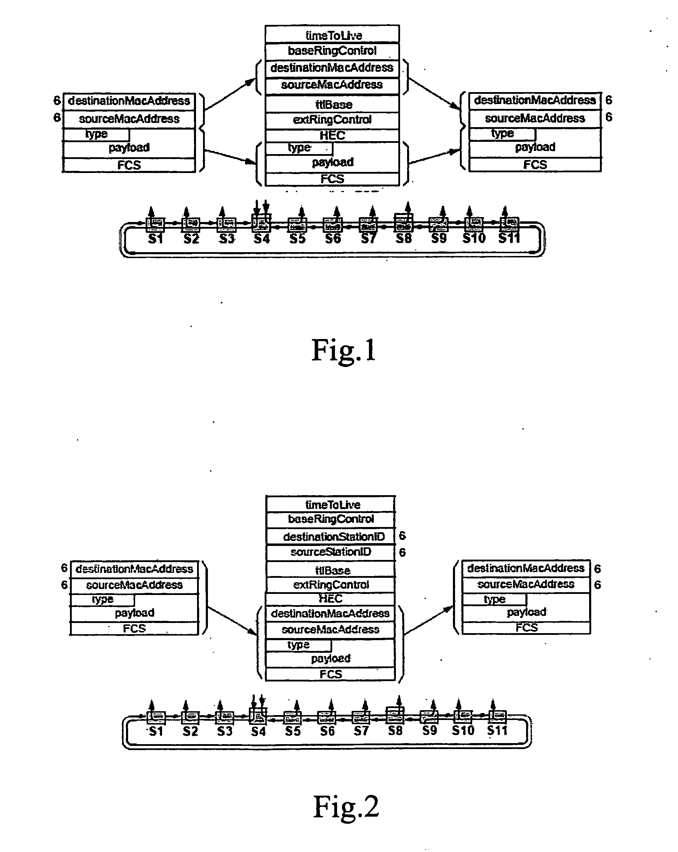

The format of the forwarded RPR data frame is formed by adding 6-byte (TTL, baseRingContorl, ttlbase and extRingControl respectively occupies one byte, HEC occupies two bytes) contents based on the original Ethernet data frame format and after being permutated and combined. Wherein the HEC in the RPR MAC format is a check for an RPR header, while the FCS (4 bytes) is a check for contents behind the RPR header. Specific definitions of these domains may be obtained with reference to IEEE 802.17. The encapsulation format is shown in FIG 1.

(2) Local broadcast, multicast and unknown unicast forwarding

Local broadcast and multicast forwarding refer to that a source station of an RPR traffic is a ring MAC station while destination stations are all of the ring stations or a group of ring stations. Similar to the local known unicast forwarding, it belongs to L3 forwarding. In this case, a corresponding destination MAC address is a broadcast MAC address or a multicast MAC address.

As shown in FIG.1, in the case of local broadcast and multicast forwarding, processing of the RPR MAC data frame format is identical with that of the local known unicast format, only the destination MAC address is a broadcast address or a multicast address.

The local unknown unicast forwarding refers to that a source station of an RPR traffic is a ring MAC address, while a destination station is not a ring station MAC address but a host MAC address under a certain unknown ring station, i.e., the destination address is not an RPR local address but a remote host address, and the traffic needs to be inserted or copied via a certain ring station. The local unknown unicast forwarding also belongs to L3 forwarding.

In an case of local unknown unicast forwarding, Flooding needs to be performed for the RPR data frame on the whole ring to ensure that the RPR data frame arrives at the destination host of the traffic because the destination station information is unknown. I.e., all the RPR stations on the ring need to copy the traffic and perform Flooding in the L2 Ethernet under respective station to ensure that the traffic arrives at the destination host. In this case, the data frame format of the RPR MAC frame in the ring network is also the same as that of the local known unicast, but there is a Flooding bit in the added 6 bytes for indicating the data frame is a Flooding data frame.

The so-called Remote Forwarding refers to one of the following three cases: the IEEE 802.3 Ethernet source MAC address of the traffic is not a MAC address of a ring station; or the IEEE 802.3 Ethernet destination MAC address is not a MAC address of a ring station; or neither of them is a MAC address of a ring station. From another aspect, the networking demand here is that not all of those connected under RPR are L3 switches or routers, i.e. RPR needs to construct a L2 Ethernet network, so the Remote Forwarding is also called L2 forwarding. The Remote Forwarding may be classified into known unicast forwarding, unknown unicast forwarding, multicast forwarding and broadcast forwarding.

(1) Remote known unicast forwarding

If neither of a source MAC address and a destination MAC address of an IEEE 802.3 Ethernet data frame inserted on an RPR ring is a MAC address of a ring station, when the IEEE 802.3 Ethernet data frame passes through the RPR stations, it needs to be inserted at a certain RPR source station and be copied at a certain RPR destination station. So, when this 802.3 data frame passes through an IEEE 802.17 ring network, two kinds of MAC address concepts are needed, one is the source and destination MAC addresses of IEEE 802.3, the other is the source and destination MAC addresses of IEEE 802.17. The former represents the final source and destination host addresses of the traffic. The latter represents the inserting station address and copying station address when crossing the RPR. Although both of these two MAC addresses are defined as 48-bit addresses, the specific meanings are different.

When the IEEE 802.3 Ethernet data frame is inserted, an RPR apparatus will add an 18-byte IEEE 802.17 RPR data frame header to an anterior part of the frame. And when the data frame is copied, the original IEEE 802.3 Ethernet data frame format is restored. Besides the six bytes of TTL, baseRingControl, ttlbase, extRingControl and HEC, the added 18 bytes also include 6-byte inserting RPR station address and 6-byte copying RPR station address. The specific encapsulation format is shown in FIG.2.

(2) Remote broadcast, multicast and unknown unicast forwarding

The remote broadcast forwarding and multicast forwarding refer to an case that a destination MAC address of a 802.3 traffic is a broadcast or multicast MAC address. The RPR data frame format in this case is the same as that shown in FIG.2, but the corresponding destination RPR station address is a broadcast address or a multicast address. The forwarding processing format of the remote unknown unicast is the same as that of the broadcast, needs to add an 18-byte IEEE 802.17 RPR data frame header to the anterior part of the IEEE 802.3 Ethernet data frame format, and is restored to the original IEEE 802.3 Ethernet data frame format when the traffic is copied.

When the traffic is copied, how does an apparatus know whether it is Local Forwarding or Remote Forwarding? It is determined by a bit in the extRingControl byte of the RPR header, and the bit indicates which encapsulation format the RPR data frame employs.

However, the RPR standard networking scheme only supports pure L3 or pure L2 networking. Namely, if an operator wants to simultaneously provide an L2 traffic and an L3 traffic for users, he needs to construct a L2 RPR network and a L3 RPR network simultaneously, which will greatly increase the networking investment cost. From another aspect, an L2 apparatus and an L3 apparatus cannot simultaneously exist in an RPR network in the prior art, otherwise, neither the L2 traffic nor the L3 traffic will normally operate. The RPR standard has no specific technical scheme for the apparatus to bear and forward data in L2/L3 mixed networking, so an economical and high-efficient scheme is needed for solving the issue of L2/L3 compatibility during RPR networking.

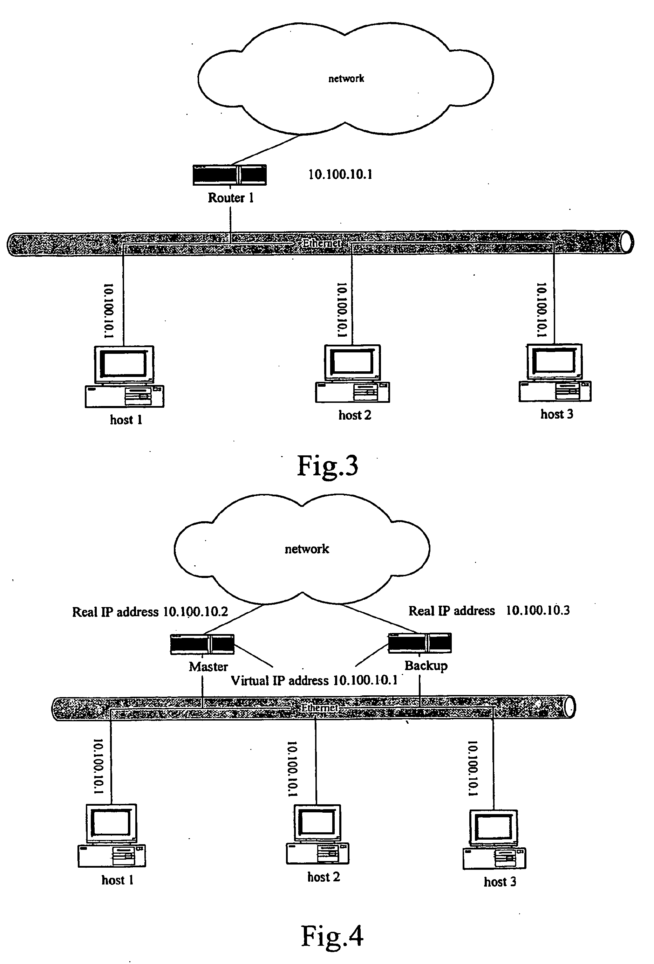

In addition, VRRP (Virtual Router Redundancy Protocol) is a fault tolerant protocol, which has the same function as the private protocol HSRP (Hot Standby Redundancy Protocol) of CISCO. The protocol may ensure normal communication when a next-hop router in a host route goes wrong. As shown in FIG.3, in general, a default route (10.100.10.1) is configured for a host in a network, and a next hop of the route points to Router 1 in the network segment which the host is in, in this way, a message whose destination address is not in the network segment transmitted from the host will be transmitted to the Router 1 via the default route, so that communication between the host and an exterior network is realized. When the Router 1 goes wrong, the communication between all the hosts with the Router 1 as the next hop of the default route within this network segment and the exterior will be cut off.

VRRP is presented for solving the described problem, which is designed for LAN(Local Area Network) (e.g. the Ethernet) with multicast or broadcast capability. As shown in FIG.4, VRRP organizes a group of routers in the LAN, including a MASTER (master router) and some BACKUPs (backup routers) to form a virtual router, which is called a backup group. This virtual router has its own IP address 10.100.10.1 (the IP address may be the same as an interface address of a certain router in the backup group). The routers in the backup group also have their own IP addresses (the IP address of MASTER is 10.100.10.2, and the IP address of BACKUP is 10.100.10.3). The hosts in the LAN only know the IP address 10.100.10.1 of the virtual router, but do not know the specific IP address 10.100.10.2 of MASTER and IP address 10.100.10.3 of BACKUP and set their default route as the IP address 10.100.10.1 of the virtual router. Therefore, the hosts within the network will communicate with other networks through the virtual router.

Each VRRP backup group has a MAC address. On receiving an ARP (Address Resolution Protocol) request for the MAC address of the virtual IP address, an apparatus will return the virtual MAC address. This MAC address is appointed by the protocol, and its format is: 00-00-5e-00-01-{group-number}. The following process needs to be implemented for the virtual router backup group.

1) selecting a MASTER according to priorities. The router with the highest priority is the MASTER. If the priorities of the routers are same, comparing master IP addresses of interfaces, and a router with the largest master IP address is selected as the MASTER, which provides practical routing service.

2) other routers are regarded as the BACKUPs to monitor the state of the MASTER at any moment. When the MASTER operates normally, the MASTER will periodically transmit an ADVERTISEMENT message to inform the BACKUP router in the group that the MASTER is in normal operating state. When the BACKUP router in the group has not received a message from the MASTER for a long period, it becomes the MASTER. If there are several BACKUP routers, there may be several MASTER routers. Each BACKUP will compare the priority in the ADVERTISEMENT message with its local priority. If the local priority is lower than the priority in the ADVERTISEMENT, the BACKUP will converts its state to BACKUP, otherwise, it will keep its state. Through this process, a router with the highest priority is selected as a new MASTER and accomplish the backup function of VRRP.

VRRP defined in RFC 2338 is established based on HSRP. In order to reduce additional load of a network due to providing redundancy function, VRRP simplifies the mechanism provided by HSRP. Messages are transmitted only by the router acting as the MASTER. In addition, there is only one kind of message, ADVERTISEMENT message. Moreover, VRRP also supports setting a real interface IP address as a virtual IP address, and actually, this is a common case. In this case, the router is called an IP address owner.

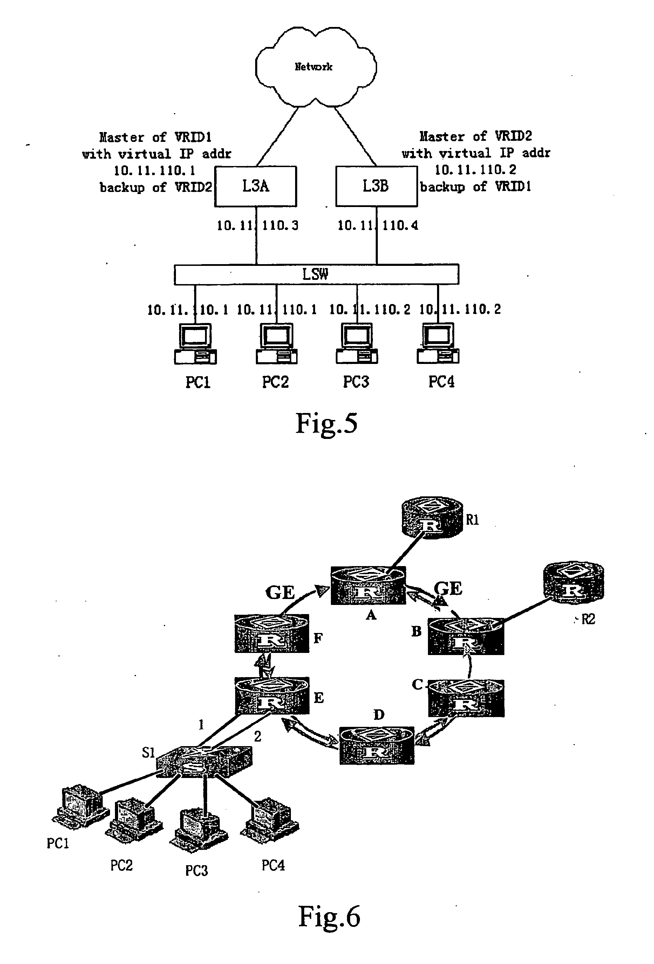

In practical VRRP networking applications, besides the above redundancy backup, the load balancing approach shown in FIG.5 is usually employed.

As shown in FIG.5, the gateways of PC1 and PC2 are configured as 10.11.110.1, and the gateways of PC3 and PC4 are configured as 10.11.110.2. At the same time, two backup groups are simultaneously configured on L3A and L3B, the virtual IP addresses of which are the two gateway addresses. A and B become respectively the MASTER of group 1 and group 2 by configuring priorities. In this network, if a L3 apparatus goes wrong, the other L3 apparatus may replace it, at the same time, the network load is averagely allocated to the two apparatus.

But the prior RPR solution cannot solve the problem of realizing dual-home network in technologies such as VRRP in an RPR network. As shown in FIG.6, the nethermost four hosts: PC1, PC2, PC3 and PC4 and the uppermost two routers R1 and R2 compose a VRRP dual-home network. The routers R1 and R2 are the backups for each other, and they share one virtual MAC address and one virtual IP address. Passing through a L2 switch S1, PC1, PC2, PC3 and PC4 connect with an RPR apparatus via two physical interfaces 1 and 2, then connect with two VRRP routers R1 and R2 through an RPR ring. Since the two routers share one unicast MAC address, one unicast destination MAC address can not belong to two RPR stations simultaneously. So the prior art cannot solve the problem of coexistence between dual-home and RPR. WO 2004/068788 A1 discloses a system for receiving and transmitting different data frames on digital transmission network consisting of: at least one interface connecting with the user's network and/or at least one network interface connecting with the digital transmission net for transmitting the data, and the data conversion device connecting with said user interface and said network interface, converting the data format between said user interfaces or converting the data format between said network interfaces or converting the data format between said user interface and said network interface. US 2004/170184 A1 discloses a bridge node that converts a MAC frame addressed to a station node into a RPR MAC frame and thus transmits it, and that encapsulates a MAC frame addressed a station being located the outside of a ring and connected to other bridge node into the RPR MAC frame, and transmits it. The bridge node thereby receives a RPR MAC frame into which the MAC frame is encapsulated, and the station node receives the RPR MAC frame that the MAC frame is not encapsulated.

### Summary of the Invention

According to an embodiment of the present invention, there is provided an inserting and copying processing method and a network apparatus for implementing an L2/L3 compatible RPR network, which implements conversion between Ethernet format and RPR format of a data frame according to specific situation of L2/L3 networking.

According to an embodiment of the present invention, there is provided a data forwarding method for a dual-home network based on RPR, which supports the dual-home network based on RPR.

According to an embodiment of the present invention, there is provided a method for implementing an L2/L3 compatible RPR network, including:

1) obtaining the source MAC address and the destination MAC address of an inserted Ethernet data frame;

2) determining whether to perform Local Forwarding or Remote Forwarding for the data frame according to the source MAC address and the destination MAC address of the data frame; and correspondingly encapsulating the data frame as an RPR data frame with RPR local format or RPR remote format;

3) forwarding the encapsulated RPR data frame in the RPR network.

Preferably, the determining in the step 2) further includes:

21) when the destination MAC address of the inserted Ethernet data frame is a unicast address, looking up the source MAC address and the destination MAC address of the data frame in a ring station MAC address table;

22) obtaining a forwarding mode of the data frame according to a found result.

Preferably, the step 22) further includes:

221) if the source MAC address and the destination MAC address of the Ethernet data frame are found in the ring station MAC address table, encapsulating the data frame with the RPR local format;

222) if the source MAC address of the Ethernet data frame is not found and the destination MAC address of the Ethernet data frame is found in the ring station MAC address table, encapsulating the data frame with the RPR remote format.

Preferably, in the step 222), a sourceStationID value in an RPR header is set according to an insert-station.

Preferably, the step 22) further includes:

223) if the source MAC address of the Ethernet data frame is found and the destination MAC address of the Ethernet data frame is not found in the ring station MAC address table, looking up the destination MAC address in a correspondence table of a host MAC address and an RPR station;

224) obtaining a forwarding mode of the data frame according to a result found in the correspondence table.

Preferably, the step 224) further includes:

51) if the destination MAC address is found in the correspondence table of the host MAC address and the RPR station, encapsulating the data frame with the RPR remote format;

52) if the destination MAC address is not found in the correspondence table of the host MAC address and the RPR station, encapsulating the data frame with the RPR local format.

Preferably, the step 51) further includes: setting the destinationStationID value in the RPR header according to the correspondence table of the host MAC address and the RPR station, and setting the sourceStationID value in the RPR header according to the ring station MAC address table; the step 52) further includes: setting the data frame as Flooding mode.

Preferably, the step 22) further includes:

225) if both the source MAC address and the destination MAC address of the Ethernet data frame are not found in the ring station MAC address table, looking up the destination MAC address in the correspondence table of the host MAC address and the RPR station;

226) if the destination MAC address is not found in the correspondence table of the host MAC address and the RPR station, encapsulating the data frame with the RPR remote format, setting the sourceStationID value in the RPR header according to the insert-station, and setting the data frame as Flooding mode.

Preferably, the determining in the step 2) further includes:

91) if the destination MAC address of the Ethernet data frame is a non-unicast address, looking up the source MAC address of the Ethernet data frame in the ring station MAC address table;

92) obtaining the forwarding mode of the data frame according to the found result.

Preferably, the step 92) further includes:

101) if the source MAC address of the Ethernet data frame is found, encapsulating the data frame with the RPR local format;

102) if the source MAC address of the Ethernet data frame is not found, encapsulating the data frame with the RPR remote format, and setting the sourceStationID value in the RPR header according to the insert-station.

According to an embodiment of the present invention, there is provided a method for implementing an L2/L3 compatible RPR network, including:

111) determining, from an encapsulation format of an RPR data frame, whether a forwarding mode of the RPR data frame to be forwarded is Local Forwarding or Remote Forwarding;

112) converting the RPR data frame to an Ethernet data frame according to a determination result;

113) forwarding the converted Ethernet data frame.

Preferably, the converting in the step 112) includes:

121) if the forwarding mode of the RPR data frame is Local Forwarding, extracting a corresponding source MAC address and a destination MAC address from the RPR data frame, recombining them into the new Ethernet data frame, recalculating a check, obtaining a converted Ethernet data frame, and forwarding the converted Ethernet data frame;

122) if the forwarding mode of the RPR data frame is Remote Forwarding, removing an RPR header of the RPR data frame to obtain an Ethernet data frame, and forwarding the Ethernet data frame.

Preferably, the step 121) further includes: if a Flooding flag of the RPR data frame is valid, learning a correspondence relationship between a source PC host address and an RPR station address, recoding both of a host MAC address item and an RPR station item as a sourceMacAddress value in a correspondence table of a host MAC address and an RPR station.

Preferably, the step 122) further includes: learning a correspondence relationship between a source PC host address and a source RPR station address, recording a host MAC address item as a sourceMacAddress value and recording an RPR station item as a sourceStationID value in a correspondence table of a host MAC address and an RPR station.

According to an embodiment of the present invention, there is provided an RPR network apparatus located in an RPR network, including:

an on-ring interface, connecting with other network apparatus in the RPR network for receiving and transmitting data frames;

an off-ring interface, coupled to at least one host;

a forwarding determination and processing module, analyzing a data frame from the off-ring interface, selecting a Local Forwarding mode or a Remote Forwarding mode to re-encapsulate the data frame according to an analysis result and transmitting the re-encapsulated data frame to the on-ring interface.

Preferably, the forwarding determination and processing module includes: a forwarding determination module coupled to the on-ring interface and the off-ring interface, a local forwarding module coupled to the on-ring interface, the off-ring interface and the forwarding determination module, and a remote forwarding module coupled to the on-ring interface, the off-ring interface and the forwarding determination module; wherein, the forwarding determination module is designed to analyze whether to implement Local Forwarding or Remote Forwarding for the data frame according to a destination MAC address and a source MAC address of the data frame; the local forwarding module is designed to encapsulate and decapsulate a locally forwarded data frame, and the remote forwarding module is designed to encapsulate and decapsulate a remotely forwarded data frame.

Preferably, the forwarding determination and processing module is further designed to analyze the data frame from the on-ring interface, re-encapsulate the data frame according to the analysis result and transmit the re-encapsulated data frame to the off-ring interface.

Preferably, the data frame received/transmitted by the off-ring interface is a data frame of IEEE802.3, while the data frame received/transmitted by the on-ring interface is an RPR data frame of IEEE802.17, wherein a encapsulation format for the Local Forwarding or the Remote Forwarding follows definition of IEEE802.17.

According to an embodiment of the present invention, there is provided a network apparatus, including:

a first interface, interconnecting with the other network apparatus;

a second interface, coupled to at least one host;

a determination module, analyzing a source MAC (Media Access Control) address and a destination MAC address of a data frame from the second interface, determining whether to perform Local Forwarding or Remote Forwarding for the data frame according to the source MAC address and the destination MAC address of the data frame, and outputting a first analysis result or a second analysis result;

a first forwarding module, re-encapsulating the data frame with RPR local format according to the first analysis result and transmitting the data frame to the first interface;

a second forwarding module, re-encapsulating the data frame with RPR remote format according to the second analysis result and transmitting the data frame to the first interface.

Preferably, the first analysis result is IEEE802.17 Local Forwarding, and the second analysis result is IEEE802.17 Remote Forwarding; the first forwarding module follows rules of IEEE802.17 Local Forwarding for encapsulating and decapsulating a packet header, and the second forwarding module follows rules of IEEE802.17 Remote Forwarding for encapsulating and decapsulating a packet header.

According to an embodiment of the present invention, there is provided a data forwarding method for a dual-home network based on RPR, including:

211) configuring a group MAC address forwarding table in an RPR apparatus, the table comprising a group MAC address item and one or more next-hop RPR station MAC address items;

212) when forwarding a data packet whose destination MAC address is the group MAC address, forwarding the data packet based on destination information, source information of the data packet and/or the group MAC address forwarding table.

Preferably, when both a master router and a backup router normally operate, the source information of the data packet in the step 212) is an ingress physical port of an inserting RPR station apparatus, the step 212) includes: determining which destination RPR station the data packet is forwarded to according to the ingress physical port.

Preferably, when a certain router is unable to normally operate, the destination information of the data packet in the step 212) is the destination MAC address; the step 212) includes: determining which destination RPR station the data packet is forwarded to by the inserting RPR station apparatus according to the group MAC address forwarding table.

Preferably, the group MAC address forwarding table is generated through manual configuration or automatic learning.

Preferably, a router redundancy protocol employed by the dual-home network is Virtual Router Redundancy Protocol (VRRP) or Hot Standby Redundancy Protocol (HSRP).

Comparing with the prior art, according to the embodiments of the present invention, an Ethernet data frame is analyzed when it is inserted, and whether the encapsulation format of RPR is remote format or local format is determined according to the analysis result, so the present invention may be compatible with the current L3 RPR network technology and automatically adapt to an L2 RPR network of a service. In addition, the data frame may be re-encapsulated to a new Ethernet data frame according to the forwarding mode of the data frame when it is copied.

In a preferable embodiment of the present invention, the apparatus looks up the source MAC address and the destination MAC address of the Ethernet data frame in the ring station MAC address table, and determines the encapsulation format of RPR according to the result.

Furthermore, the adapting process in an embodiment of the present invention may be automatic learning without software or manual intervention, which meets various networking demands of users.

The characteristics and the advantages of the embodiments of the present invention also include: a dual-home network based on RPR may select a destination RPR station according to destination information, source information of a data frame and/or a group MAC address forwarding table, so that a mixed networking capability of RPR and VRRP/HSRP is provided. The issue of mixed networking of dual-home technology such as RPR and VRRP/HSRP in practical applications is solved. The networking capability is efficiently provided and the demand of users may be satisfied.

### Brief Description of the Drawings

FIG. 1 is a schematic diagram illustrating RPR local encapsulation format;

FIG.2 is a schematic diagram illustrating RPR remote encapsulation format;

FIG.3 is a schematic diagram illustrating a common single-home network;

FIG.4 is a schematic diagram illustrating VRRP networking;

FIG.5 is a schematic diagram illustrating a load balancing approach in a VRRP networking application;

FIG.6 is a schematic diagram illustrating a dual-home network based on RPR;

FIG.7 is a flow chart illustrating forwarding processing for an inserting traffic according to an embodiment of the present invention;

FIG.8 is a flow chart illustrating forwarding processing for a copying traffic according to an embodiment of the present invention;

FIG.9 is a block diagram illustrating a network apparatus according to an embodiment of the present invention.

### Detailed Description of the Embodiments

Hereinafter the present invention will be further described with reference to the accompanying drawings and embodiments.

An integral technical scheme of an embodiment of the present invention includes: forwarding processing for an inserting traffic and forwarding processing for a copying traffic in an RPR network.

1. forwarding processing for an inserting traffic

When a traffic is inserted in the RPR network, a L2/L3 inserting forwarding determination and processing module needs to be arranged in an RPR chip. The module is used for determining which encapsulation format should be employed and how to encapsulate the destination RPR station address and the source RPR station address. Then corresponding encapsulation processing is performed according to specific situation of L2 networking and L3 networking.

The input of the module is an IEEE 802.3 Ethernet data frame and the output of the module is an IEEE 802.17 RPR data frame. The module may automatically adapt to the Ethernet L2/L3 of the traffic and implement corresponding RPR local or remote encapsulation processing. The specific process is as follows

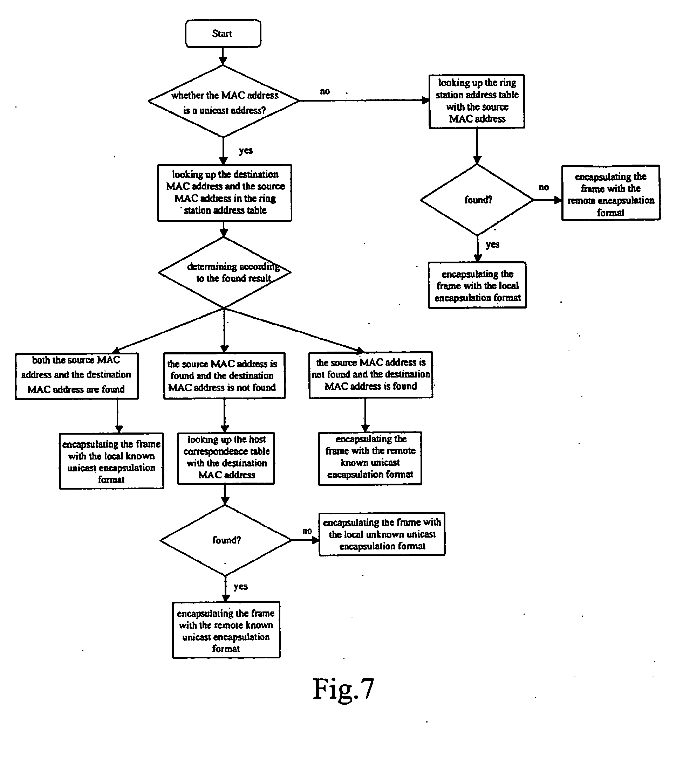

As shown in FIG.7, determining whether the destination MAC address of the IEEE 802.3 Ethernet data frame is a unicast address or a non-unicast address, if it is a unicast MAC address, processing the data frame according to the following steps:

(1) looking up the source MAC address and the destination MAC address of the IEEE 802.3 Ethernet data frame in a ring station MAC address table respectively. As described above, the ring station MAC address table may be collected from special RPR topology discovery frames according to the topology discovery of the RPR standard.

(2) if both the source MAC address and the destination MAC address are found in the ring station MAC address table, encapsulating the data frame in the IEEE 802.17 local format; on the basis of adjusting the MAC address position, adding 6-byte RPR header contents and calculating values of HEC and FCS.

(3) if the source MAC address is not found while the destination MAC address is found, encapsulating the data frame in the IEEE 802.17 RPR remote format, setting the destinationStationID in the RPR header as the destination address of the IEEE 802.3 data frame, i.e. destinationMacAddress, setting the sourceStationID in the RPR header as the MAC address of the insert-station and setting the Remote Forwarding flag in the RPR header to valid.

(4) if the source MAC address is found while the destination MAC address is not found, looking up the destination MAC address in a correspondence table of host MAC addresses and RPR stations. The content recorded in the table is under which RPR station the MAC address of a PC host is. The function and the mechanism of the table is similar to those of a MAC address table of the common L2 Ethernet, and the only difference is that the latter records under which port an MAC address of a PC host is, while the former records under which RPR station an MAC address of a PC host is. The table is also obtained through automatic learning in the receiving direction (i.e. the copying direction).

(5) if the RPR destination ring station ID corresponding to the destination MAC address is found in the correspondence table of host MAC addresses and RPR stations, encapsulating the data frame in the IEEE 802.17 RPR remote format, setting the destinationStationID in the RPR header as the MAC address of the corresponding ring station, setting the sourceStationID as the source MAC address of the IEEE 802.3 data frame, and setting the Remote Forwarding flag in the RPR header to valid.

(6) if the corresponding RPR destination ring station ID is not found according to the destination MAC address, encapsulating the data frame in the IEEE 802.17 RPR local format, and setting the Flooding flag in the RPR header to valid.

(7) if both the source MAC address and the destination MAC address are not found, encapsulating the data frame in the IEEE 802.17 RPR remote format, setting the destinationStationID in the RPR header as the destination address of the IEEE 802.3 data frame, i.e. destinationMacAddress, setting the sourceStationID as the MAC address of a ring station ID of the insert-station, setting the Flooding flag in the RPR header to valid, and setting the Remote Forwarding flag in the RPR header to valid.

Thus the forwarding processing for inserting is completed in a case that the destination address of IEEE 802.3 is a unicast address. Hereinafter the operation for inserting and forwarding in a case that the destination address of IEEE 802.3 is not a unicast address will be described.

(1) looking up the ring station MAC address table with the source MAC address of the IEEE 802.3 Ethernet. As described above, the RPR ring station MAC address table may be collected from special RPR topology discovery frames according to the topology discovery function of the RPR standard.

(2) if the source MAC address is found in the ring station MAC address table, encapsulating the data frame in the IEEE 802.17 RPR local format, on the basis of adjusting the MAC address position, adding 6-byte RPR header contents, and calculating values of HEC and FCS.

(3) if the source MAC address is not found in the ring station MAC address table, encapsulating the data frame in the IEEE 802.17 RPR remote format, setting the sourceStationID in the RPR header as the MAC address of the inserting RPR station, setting the destinationStationID as the destination MAC address of IEEE 802.3, and setting the Remote Forwarding flag in the RPR header to valid.

Thus the inserting forwarding processing for converting an Ethernet L2/L3 data frame of IEEE 802.3 to an RPR data frame of IEEE 802.17 is completed.

Of course, the inserting forwarding determination and processing also may be implemented through softwares in the RPR apparatus.

2. forwarding processing for a copying traffic

When a traffic is copied, a copying forwarding determination and processing module needs to be arranged in an RPR chip. The input of the module is an RPR data frame of IEEE 802.17 and the output of the module is an Ethernet data frame of IEEE 802.3. The module may automatically determine which encapsulation format the RPR data frame employs and accomplishes the corresponding conversion from the IEEE 802.17 encapsulation frame to the IEEE 802.3 encapsulation frame according to different encapsulation formats. Another function of the module is automatically learning a correspondence relationship between a PC host address and a RPR station.

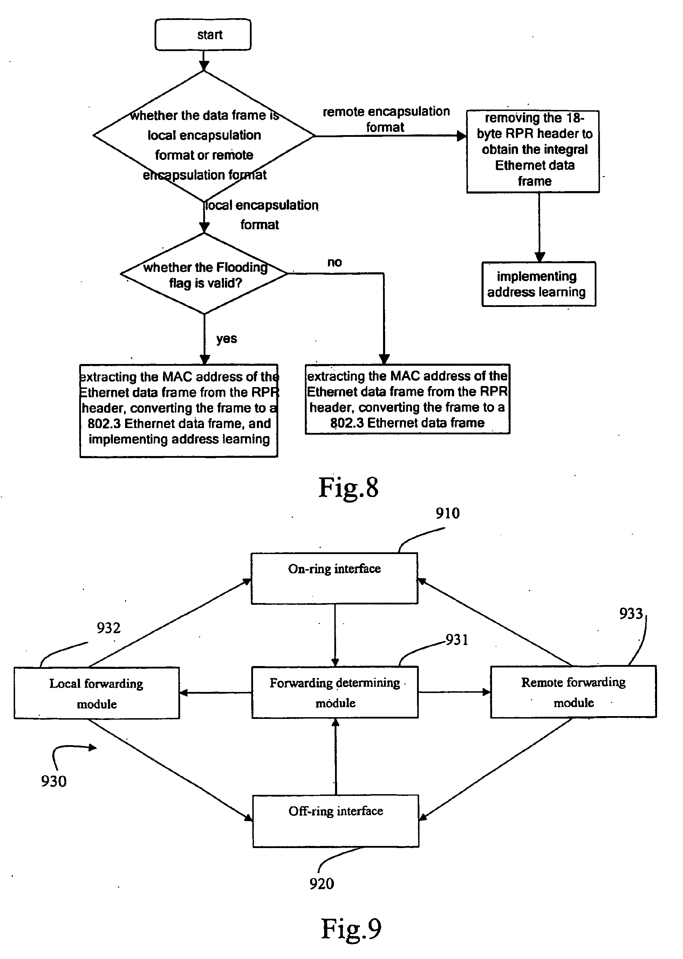

As shown in FIG.8, the detailed processing is:

Determining whether the IEEE 802.17 RPR data frame is in Local Forwarding (L3 forwarding) mode or Remote Forwarding (L2 forwarding) mode. There is a certain flag bit for the information in an RPR frame header. If the data frame is in the Local Forwarding mode, the processing is as follows:

(1) If the Flooding flag (there is a certain flag bit for the information in an extRingControl byte in an RPR frame header) is invalid, extracting the corresponding source MAC address and destination MAC address from the RPR header and recombine them into a new IEEE 802.3 Ethernet data frame, and recalculating a check to obtain a converted IEEE 802.3 Ethernet data frame.

(2) If the Flooding is valid, the process for forming a new IEEE 802.3 Ethernet data frame is the same as (1). In addition, it also needs to learn a correspondence relationship between a source PC host address and an RPR station address. The specific learning process is: recording both the host MAC address item and the RPR station item in the correspondence table of host MAC addresses and RPR stations as the source MAC address, i.e. sourceMacAddress value. Actually, the table is similar to the MAC address table of L2 switch. The latter records the correspondence relationship between an MAC address and a physical or logic port, while the former records the relationship between an MAC address and an RPR station.

Thus the conversion from the RPR data frame to the Ethernet data frame in the Local Forwarding mode and the automatic learning of the MAC address are completed. Hereinafter the converting in the Remote Forwarding mode will be described.

(1) removing the 18-byte header of the RPR data frame to obtain a converted IEEE 802.3 Ethernet data frame.

(2) learning the correspondence relationship between the source PC host address and source RPR station address. The specific learning process is: respectively recording the host MAC address item and the RPR station item in the corresponding table of host MAC addresses and RPR stations as: the sourceMacaddress value and the sourceStationID value.

Thus the integral conversion process of inserting and copying is completed. The conversion process may automatically adapt to the L2 traffic and the L3 traffic, which corresponds to an L2 switch or an L3 switch or a router.

Referring to FIG.9, an RPR network apparatus according to the embodiment of the present invention is located in an RPR network, which includes an on-ring interface 910, an off-ring interface 920 and a forwarding determination and processing module 930.

The on-ring interface 910 is connected with other network apparatus(not shown) in the RPR network, receives and transmits a data frame. The off-ring interface 920 is coupled to at least one host (not shown). The forwarding determination and processing module 930 is used for analyzing the data frame from the off-ring interface, selecting the local forwarding mode or the remote forwarding mode to re-encapsulate the data frame according to the analysis result and transmitting the data frame to the on-ring interface.

Furthermore, the forwarding determination and processing module 930 may further be used for analyzing the data frame from the on-ring interface 910, re-encapsulating the data frame according to the analysis result and transmitting the data frame to the off-ring interface 920.

In this embodiment, the data frame received/transmitted by the off-ring interface 920 is a data frame of IEEE802.3, while the data frame received/transmitted by the on-ring interface 910 is an RPR data frame of IEEE802.17. The encapsulation format for local forwarding or remote forwarding follows the definition of IEEE802.17.

Wherein, the forwarding determination and processing module 930 includes: a forwarding determination module 931 coupled to the on-ring interface 910 and the off-ring interface 920; a local forwarding module 932 coupled to the on-ring interface 910, the off-ring interface 920 and the forwarding determination module 931; and a remote forwarding module 933 coupled to the on-ring interface 910, the off-ring interface 920 and the forwarding determination module 931. Wherein the forwarding determination module 931 is used for analyzing whether local forwarding or remote forwarding will be implemented for the data frame according to the destination MAC address and the source MAC address of the data frame. The local forwarding module 932 is used for encapsulating and decapsulating a locally forwarded data frame. The remote forwarding module 933 is used for encapsulating and decapsulating a remotely forwarded data frame.

A network apparatus (not shown) provided according to the embodiment of the present invention includes: a first interface, a second interface, a determination module, a first forwarding module and a second forwarding module.

Wherein, the first interface is used for interconnecting with other network apparatus. The second interface is coupled to at least one host. The determination module is used for analyzing the data frame received by the second interface and outputting a first analysis result or a second analysis result. The first forwarding module is used for re-encapsulating the data frame according to the first analysis result and transmitting the data frame to the first interface. The second forwarding module is used for re-encapsulating the data frame according to the second analysis result and transmitting the data frame to the first interface.

Wherein the first analysis result is IEEE802.17 local forwarding, and the second analysis result is IEEE802.17 remote forwarding. The first forwarding module follows the definition of IEEE802.17 local forwarding on encapsulating and decapsulating a packet header. The second forwarding module follows the definition of IEEE802.17 remote forwarding on encapsulating and decapsulating a packet header.

An embodiment of the present invention further provides a mixed networking capability of RPR and VRRP/HSRP for the dual-home network based on RPR. The technical scheme includes: processing for a virtual MAC address and forwarding for a dual-home traffic.

1. Processing for a VRRP virtual MAC address

As described above, the MAC address of the VRRP/HSRP router is specified by VRRP/HSRP, and its format is 00-00-5e-00-01-{group-number}. The RPR technology demands that each RPR station has its unique address, and the address of one station cannot be the same or conflict with that of any other station. While the VRRP technology demands that two RPR stations share one VRRP group address, so special processing for this kind of special VPPR group MAC address needs to be performed in RPR ring station processing to meet the demand of the network.

The networking approach shown in FIG6 is Remote Forwarding mode for RPR. In the networking of VPPR and RPR shown in FIG6, the problem is that one remote host MAC address may correspond to two apparatus under two RPR stations. So two next-hop station addresses of RPR will be obtained for the same remote host MAC address (corresponding to the virtual MAC address of VRRP herein). But the RPR MAC in the prior art cannot support this situation.

A method for solving the problem is to construct a group MAC address forwarding table in the RPR apparatus and allow the table to support two or more next-hop RPR station addresses for the group MAC address with the format of 00-00-5e-00-01- (group number). The group MAC address table may be statically configured or dynamically learned. In an case of static configuration, the table is obtained by manual configuration, while in the case of dynamic learning, the table is obtained by dynamic learning according to which RPR station the VRRP group address is transmitted from. For example, the VRRP group address 1 (00005e0001 - { group 1 } ) in Table 1 is transmitted from the RPR stations A and B, and the apparatus automatically learns the correspondence relationship to generate the following table.

**Table 1**

| VRRP group address | Next-hop RPR station | |
|---|---|---|
| 00005e0001-{group1} | A | B |

2. forwarding for a dual-home traffic

In an case that a specific virtual MAC address supports two or more next-hop RPR station addresses, how to select the destination station of forwarding? It may be solved by source forwarding. The ingress physical port of the system side S1 is used for determining which destination RPR station the traffic will be forwarded to. For example, it could be set that the data packets inserted from the left ingress physical interface 1 will be forwarded to station A, and the data packets inserted from the right ingress physical interface 2 will be forwarded to station B. In normal cases, the ingress physical port determines which VRRP router the data packets will be forwarded to. In special cases, if a router goes wrong, other stations will be selected to forward the packets according to the order configured in advance. For example, if there are only two next hops and one hop goes wrong, the packets will be forwarded by the other as the next-hop destination RPR station.

## Claims

1. A method for implementing an L2/L3 compatible Resilient Packet Ring, RPR, network, comprising:
1) obtaining a source Media Access Control, MAC, address and a destination MAC address of an inserted Ethernet data frame;
2) determining whether to perform Local Forwarding, L3 forwarding or Remote Forwarding, L2 forwarding, for the data frame according to the source MAC address and the destination MAC address of the data frame; and correspondingly encapsulating the data frame as an RPR data frame with RPR local format or RPR remote format;
3) forwarding the encapsulated RPR data frame in the RPR network.

2. The method of claim 1, wherein, the determining in the step 2) further comprises:
21) when the destination MAC address of the inserted Ethernet data frame is a unicast address, looking up the source MAC address and the destination MAC address of the data frame in a ring station MAC address table;
22) obtaining a forwarding mode of the data frame according to a found result.

3. The method of claim 2, wherein, the step 22) further comprises:
221) if the source MAC address and the destination MAC address of the Ethernet data frame are found in the ring station MAC address table, encapsulating the data frame with the RPR local format;
222) if the source MAC address of the Ethernet data frame is not found and the destination MAC address of the Ethernet data frame is found in the ring station MAC address table, encapsulating the data frame with the RPR remote format.

4. The method of claim 3, wherein, in the step 222), a sourceStationID value in an RPR header is set according to an insert-station.

5. The method of claim 3, wherein, the step 22) further comprises:
223) if the source MAC address of the Ethernet data frame is found and the destination MAC address of the Ethernet data frame is not found in the ring station MAC address table, looking up the destination MAC address in a correspondence table of a host MAC address and an RPR station;
224) obtaining a forwarding mode of the data frame according to a result found in the correspondence table.

6. The method of claim 5, wherein, the step 224) further comprises:
51) if the destination MAC address is found in the correspondence table of the host MAC address and the RPR station, encapsulating the data frame with the RPR remote format;
52) if the destination MAC address is not found in the correspondence table of the host MAC address and the RPR station, encapsulating the data frame with the RPR local format.

7. The method of claim 6, the step 51) further comprising setting the destinationStationID value in the RPR header according to the correspondence table of the host MAC address and the RPR station, and setting the sourceStationID value in the RPR header according to the ring station MAC address table; the step 52) further comprising, setting the data frame as Flooding mode.

8. The method of claim 3, wherein, the step 22) further comprises:
225) if both the source MAC address and the destination MAC address of the Ethernet data frame are not found in the ring station MAC address table, looking up the destination MAC address in the correspondence table of the host MAC address and the RPR station;
226) if the destination MAC address is not found in the correspondence table of the host MAC address and the RPR station, encapsulating the data frame with the RPR remote format, setting the sourceStationID value in the RPR header according to the insert-station, and setting the data frame as Flooding mode.

9. The method of claim 1, wherein, the determining in the step 2) further comprises:
91) if the destination MAC address of the Ethernet data frame is a non-unicast address, looking up the source MAC address of the Ethernet data frame in the ring station MAC address table;
92) obtaining the forwarding mode of the data frame according to the found result.

10. The method of claim 9, wherein, the step 92) further comprises:
101) if the source MAC address of the Ethernet data frame is found, encapsulating the data frame with the RPR local format;
102) if the source MAC address of the Ethernet data frame is not found, encapsulating the data frame with the RPR remote format, and setting the sourceStationID value in the RPR header according to the insert-station.

11. A method for implementing an L2/L3 compatible Resilient Packet Ring, RPR, network, comprising:
111) determining, from an encapsulation format of an RPR data frame, whether a forwarding mode of the RPR data frame to be forwarded is Local Forwarding, L3 forwarding, or Remote Forwarding, L2 forwarding;
112) converting the RPR data frame to an Ethernet data frame according to a determination result;
113) forwarding the converted Ethernet data frame.

12. The method of claim 11, wherein, the converting in the step 112) comprises:
121) if the forwarding mode of the RPR data frame is Local Forwarding, extracting a corresponding source MAC address and a destination MAC address from the RPR data frame, recombining them into the new Ethernet data frame, recalculating a check, obtaining a converted Ethernet data frame, and forwarding the converted Ethernet data frame;
122) if the forwarding mode of the RPR data frame is Remote Forwarding, removing an RPR header of the RPR data frame to obtain an Ethernet data frame, and forwarding the Ethernet data frame.

13. The method of claim 12, the step 121) further comprising: if a Flooding flag of the RPR data frame is valid, learning a correspondence relationship between a source PC host address and an RPR station address, recoding both of a host MAC address item and an RPR station item as a sourceMacAddress value in a correspondence table of a host MAC address and an RPR station.

14. The method of claim 12, the step 122) further comprising: learning a correspondence relationship between a source PC host address and a source RPR station address, recording a host MAC address item as a sourceMacAddress value and recording an RPR station item as a sourceStationID value in a correspondence table of a host MAC address and an RPR station.

15. A network apparatus (930), comprising:
a first interface (910), interconnecting with other network apparatus;
a second interface (920), coupled to at least one host;
a determination module (931), analyzing a source Media Access Control, MAC, address and a destination MAC address of a data frame from the second interface, determining whether to perform Local Forwarding, L3 forwarding, or Remote Forwarding, L2 forwarding, for the data frame according to the source MAC address and the destination MAC address of the data frame, and outputting a first analysis result or a second analysis result;
a first forwarding module (932), re-encapsulating the data frame with RPR local format according to the first analysis result and transmitting the data frame to the first interface;
a second forwarding module (933), re-encapsulating the data frame with RPR remote format according to the second analysis result and transmitting the data frame to the first interface.

16. The network apparatus of claim 15, wherein, the first analysis result is IEEE802.17 Local Forwarding, and the second analysis result is IEEE802.17 Remote Forwarding; the first forwarding module (932) follows rules of IEEE802.17 Local Forwarding for encapsulating and decapsulating a packet header, and the second forwarding module (933) follows rules of IEEE802.17 Remote Forwarding for encapsulating and decapsulating a packet header.

17. The network apparatus of claim 15, wherein the network apparatus (930) is a RPR network apparatus located in an RPR network, the first interface (910) is an on-ring interface, connecting with other network apparatus in the RPR network for receiving and transmitting data frames, the second interface (920) is an off-ring interface, coupled to at least one host.

18. The network apparatus of claim 17, wherein the determination module (931) is a forwarding determination module coupled to the on-ring interface and the off-ring interface, the first forwarding module (932) is a local forwarding module coupled to the on-ring interface, the off-ring interface and the forwarding determination module, and the second forwarding module (932) is a remote forwarding module coupled to the on-ring interface, the off-ring interface and the forwarding determination module.

19. The network apparatus of claim 17, wherein, the data frame received/transmitted by the off-ring interface is a data frame of IEEE802.3, the data frame received/transmitted by the on-ring interface is an RPR data frame of IEEE802.17, and a encapsulation format for the Local Forwarding or the Remote Forwarding follows definition of IEEE802.17.

## Patentansprüche

1. Verfahren zur Implementierung eines L2/L3-kompatiblen nachgiebigen Paketringnetzwerks RPR, umfassend:
1) Beschaffen einer Medienzugriffssteuerungs-(Media-Access-Control, MAC)-Adresse einer Quelle und einer Ziel-MAC-Adresse eines eingefügten Ethernet-Datenframes;
2) Bestimmen, ob entsprechend der Quell-MAC-Adresse und der Ziel-MAC-Adresse des Datenframes die Lokale Weiterleitung, L3-Weiterleitung, oder die Fern-Weiterleitung, L2-Weiterleitung, für den Datenframe auszuführen ist, und dementsprechendes Kapseln des Datenframes als ein RPR-Datenframe mit dem RPR-Lokalformat oder dem RPR-Fern-(remote)-format;
3) Weiterleiten des gekapselten RPR-Datenframes im RPR-Netzwerk.

2. Verfahren nach Anspruch 1, wobei die Bestimmung im Schritt 2) ferner umfasst:
21) Aufsuchen der Quell-MAC-Adresse und der Ziel-MAC-Adresse des Datenframes in einer Ringstation-MAC-Adressentabelle, wenn die Ziel-MAC-Adresse des eingefügten Ethernet-Datenframes ein Unicast-Adresse ist;
22) Beschaffen eines Weiterleitungsmodus des Datenframes entsprechend einem gefundenen Ergebnis.

3. Verfahren nach Anspruch 2, wobei der Schritt 22) ferner umfasst:
221) Kapseln des Datenframes mit dem RPR-Lokalformat, wenn in der Ringstation-MAC-Adressentabelle die Quell-MAC-Adresse und die Ziel-MAC-Adresse des Ethernet-Datenframes gefunden werden;
222) Kapseln des Datenframes mit dem RPR-Fernformat, wenn in der Ringstation-MAC-Adressentabelle die Quell-MAC-Adresse des Ethernet-Datenframes nicht gefunden wird und die Ziel-MAC-Adresse des Ethernet-Datenframes gefunden wird.

4. Verfahren nach Anspruch 3, wobei im Schritt 222) ein Quellstation-ID-Wert entsprechend einer Einfügestation in einem RPR-Header gesetzt wird.

5. Verfahren nach Anspruch 3, wobei der Schritt 22) ferner umfasst:
223) Aufsuchen der Ziel-MAC-Adresse in einer Korrespondenztabelle einer Host-MAC-Adresse und einer RPR-Station, wenn in der Ringstation-MAC-Adressentabelle die Quell-MAC-Adresse des Ethernet-Datenframes gefunden wird und die Ziel-MAC-Adresse des Ethernet-Datenframes nicht gefunden wird;
224) Beschaffen eines Weiterleitungsmodus des Datenframes entsprechend einem in der Korrespondenztabelle gefundenen Ergebnis.

6. Verfahren nach Anspruch 5, wobei der Schritt 224) ferner umfasst:
51) Kapseln des Datenframes mit dem RPR-Fernformat, wenn die Ziel-MAC-Adresse in der Korrespondenztabelle der Host-MAC-Adresse und der RPR-Station gefunden wird;
52) Kapseln des Datenframes mit dem RPR-Lokalformat, wenn die Ziel-MAC-Adresse in der Korrespondenztabelle der Host-MAC-Adresse und der RPR-Station nicht gefunden wird.

7. Verfahren nach Anspruch 6, wobei der Schritt 51) ferner das Setzen des Zielstation-ID-Wertes im RPR-Header entsprechend der Korrespondenztabelle der Host-MAC-Adresse und der RPR-Station und das Setzen des Zielstation-ID-Wertes im RPR-Header entsprechend der Ringstation-MAC-Adressentabelle umfasst, wobei der Schritt 52) ferner das Setzen des Datenframes als Flooding-Modus umfasst.

8. Verfahren nach Anspruch 3, wobei der Schritt 22) ferner umfasst:
225) Aufsuchen der Ziel-MAC-Adresse in der Korrespondenztabelle der Host-MAC-Adresse und der RPR-Station, wenn weder die Quell-MAC-Adresse noch die Ziel-MAC-Adresse des Ethernet-Datenframes in der Ringstation-MAC-Adressentabelle gefunden wird;
226) Kapseln des Datenframes mit dem RPR-Fernformat, Setzen des Quellstation-ID-Wertes im RPR-Header entsprechend der Einfügestation und Setzen des Datenframes als Flooding-Modus, wenn die Ziel-MAC-Adresse nicht in der Korrespondenztabelle der Host-MAC-Adresse und der RPR-Station gefunden wird.

9. Verfahren nach Anspruch 1, wobei das Bestimmen im Schritt 2) ferner umfasst:
91) Aufsuchen der Quell-MAC-Adresse des Ethernet-Datenframes in der Ringstation-MAC-Adressentabelle, wenn die Ziel-MAC-Adresse des Ethernet-Datenframes eine Nicht-Unicast-Adresse ist;
92) Beschaffen des Weiterleitungsmodus des Datenframes entsprechend dem gefundenen Ergebnis.

10. Verfahren nach Anspruch 9, wobei der Schritt 92) ferner umfasst:
101) Kapseln des Datenframes mit dem RPR-Lokalformat, wenn die Quell-MAC-Adresse des Ethernet-Datenframes gefunden wurde;
102) Kapseln des Datenframes mit dem RPR-Fernformat und Setzen des Quellstation-ID-Wertes im RPR-Header entsprechend der Einfügestation, wenn die Quell-MAC-Adresse des Ethernet-Datenframes nicht gefunden wurde.

11. Verfahren zur Implementierung eines L2/L3-kompatiblen nachgiebigen Paketringnetzwerks RPR, umfassend:
111) Bestimmen aus einem Kapselungsformat eines RPR-Datenframes, ob ein Weiterleitungsmodus des weiterzuleitenden RPR-Datenframes die Lokale Weiterleitung, L3-Weiterleitung, oder die Fern-Weiterleitung, L2-Weiterleitung, ist;
112) Umwandeln des RPR-Datenframes in ein Ethernet-Datenframe entsprechend einem Bestimmungsergebnis;
113) Weiterleiten des umgewandelten Ethernet-Datenframes.

12. Verfahren nach Anspruch 11, wobei das Umwandeln im Schritt 112) umfasst:
121) Extrahieren einer entsprechenden Quell-MAC-Adresse und einer Ziel-MAC-Adresse aus dem RPR-Datenframe, ihr Rekombinieren in den neuen Ethernet-Datenframe hinein, Neuberechnen einer Überprüfung, Beschaffen eines umgewandelten Ethernet-Datenframes und Weiterleiten des umgewandelten Ethernet-Datenframes, wenn der Weiterleitungsmodus des RPR-Datenframes die Lokale Weiterleitung ist;
122) Beseitigen eines RPR-Headers des RPR-Datenframes, um einen Ethernet-Datenframe zu erhalten, und Weiterleiten des Ethernet-Datenframes, wenn der Weiterleitungsmodus des RPR-Datenframes die Fern-Weiterleitung ist.

13. Verfahren nach Anspruch 12, wobei der Schritt 121) ferner umfasst: Erlernen einer Korrespondenzbeziehung zwischen einer Quell-PC-Hostadresse und einer RPR-Stationsadresse, Umcodieren sowohl eines Host-MAC-Adressenelements als auch eines RPR-Stationselements als ein Quell-MAC-Adressenwert in einer Korrespondenztabelle einer Host-MAC-Adresse und einer RPR-Station, wenn ein Flooding-Flag des RPR-Datenframes gültig ist.

14. Verfahren nach Anspruch 12, wobei der Schritt 122) ferner umfasst: Erlernen einer Korrespondenzbeziehung zwischen einer Quell-PC-Hostadresse und einer Quell-RPR-Stationsadresse, Speichern eines Host-MAC-Adressenelements als ein Quell-MAC-Adressenwert und Speichern eines RPR-Stationselements als ein Quellstations-ID-Wert in einer Korrespondenztabelle einer Host-MAC-Adresse und einer RPR-Station.

15. Netzwerkvorrichtung (930), umfassend:
eine erste Schnittstelle (910), welche die Verbindung mit anderen Netzwerkvorrichtungen herstellt;
eine zweite Schnittstelle (920), die an mindestens einen Host angekoppelt ist;
ein Bestimmungsmodul (931), das eine Medienzugriffssteuerungs-((MAC)-Adresse einer Quelle und eine Ziel-MAC-Adresse eines Datenframes von der zweiten Schnittstelle analysiert, wobei bestimmt wird, ob entsprechend der Quell-MAC-Adresse und der Ziel-MAC-Adresse des Datenframes die Lokale Weiterleitung, L3-Weiterleitung, oder die Fern-Weiterleitung, L2-Weiterleitung, für den Datenframe auszuführen ist, und wobei ein erstes Analyseergebnis oder ein zweites Analyseergebnis ausgegeben wird;
ein erstes Weiterleitungsmodul (932), das den Datenframe mit dem RPR-Lokalformat entsprechend dem ersten Analyseergebnis neu kapselt und den Datenframe der ersten Schnittstelle übermittelt;
ein zweites Weiterleitungsmodul (933), das den Datenframe mit dem RPR-Fernformat entsprechend dem zweiten Analyseergebnis neu kapselt und den Datenframe der ersten Schnittstelle übermittelt.

16. Netzwerkvorrichtung nach Anspruch 15, wobei das erste Analyseergebnis IEEE802.17 Lokale Weiterleitung und das zweite Analyseergebnis IEEE802.17 Fern-Weiterleitung ist, wobei das erste Weiterleitungsmodul (932) den Regeln von IEEE802.17 Lokale Weiterleitung für das Kapseln und Entkapseln eines Paketheaders folgt und das zweite Weiterleitungsmodul (933) den Regeln von IEEE802.17 Fern-Weiterleitung für das Kapseln und Entkapseln eines Paketheaders folgt.

17. Netzwerkvorrichtung nach Anspruch 15, wobei die Netzwerkvorrichtung (930) eine in einem RPR-Netzwerk liegende RPR-Netzwerkvorrichtung ist, wobei die erste Schnittstelle (910) eine On-Ring-Schnittstelle ist, welche die Verbindung mit anderen Netzwerkvorrichtungen im RPR-Netzwerk für den Empfang und das Übermitteln von Datenframes herstellt, wobei die zweite Schnittstelle (920) eine Off-Ring-Schnittstelle ist, die an mindestens einen Host angekoppelt ist.

18. Netzwerkvorrichtung nach Anspruch 17, wobei das Bestimmungsmodul (931) ein Weiterleitungsbestimmungsmodul ist, das an die On-Ring-Schnittstelle und die Off-Ring-Schnittstelle angekoppelt ist, wobei das erste Weiterleitungsmodul (932) ein lokales Weiterleitungsmodul ist, das an die On-Ring-Schnittstelle, die Off-Ring-Schnittstelle und das Weiterleitungsbestimmungsmodul angekoppelt ist, und wobei das zweite Weiterleitungsmodul (932) ein Fern-Weiterleitungsmodul ist, das an die On-Ring-Schnittstelle, die Off-Ring-Schnittstelle und das Weiterleitungsbestimmungsmodul angekoppelt ist.

19. Netzwerkvorrichtung nach Anspruch 17, wobei der Datenframe, der durch die Off-Ring-Schnittstelle empfangen/übermittelt wird, ein Datenframe nach IEEE802.3 ist, wobei der Datenframe, der durch die On-Ring-Schnittstelle empfangen/übermittelt wird, ein RPR-Datenframe nach IEEE802.17 ist und wobei ein Kapselungsformat für die Lokale Weiterleitung oder die Fern-Weiterleitung der Definition von IEEE802.17 folgt.

## Revendications

1. Procédé pour mettre en oeuvre un réseau an anneau de paquets résilients, RPR, compatible L2/L3, comportant les étapes consistant à :
1) obtenir une adresse de commande d'accès au support, MAC, source et une adresse MAC de destination d'une trame de données Ethernet insérée,
2) déterminer s'il faut effectuer un transfert local, transfert L3, ou un transfert distant, transfert L2, pour la trame de données d'après l'adresse MAC source et à l'adresse MAC de destination de la trame de données, et encapsuler de manière correspondante la trame de données comme une trame de données RPR avec le format local du RPR ou le format distant du RPR,
3) transférer la trame de données RPR encapsulée dans le réseau RPR.

2. Procédé selon la revendication 1, dans lequel la détermination à l'étape 2) comporte en outre les étapes consistant à :
21) lorsque l'adresse MAC de destination de la trame de données Ethernet insérée est une adresse de diffusion individuelle, rechercher l'adresse MAC source et l'adresse MAC de destination de la trame de données dans une table d'adresses MAC de station d'anneau,
22) obtenir un mode de transfert de la trame de données d'après un résultat trouvé.

3. Procédé selon la revendication 2, dans lequel l'étape 22) comporte également les étapes consistant à :
221) si l'adresse MAC source et l'adresse MAC de destination de la trame de données Ethernet sont trouvées dans la table d'adresses MAC de station d'anneau, encapsuler la trame de données avec le format local du RPR,
222) si l'adresse MAC source de la trame de données Ethernet n'est pas trouvée et que l'adresse MAC de destination de la trame de données Ethernet est trouvée dans la table d'adresses MAC de station d'anneau, encapsuler la trame de données avec le format distant du RPR.

4. Procédé selon la revendication 3, dans lequel, à l'étape 222), une valeur IDstationSource dans un en-tête RPR est fixée d'après une station d'insertion.

5. Procédé selon la revendication 3, dans lequel l'étape 22) comporte en outre les étapes consistant à :
223) si l'adresse MAC source de la trame de données Ethernet est trouvée et que l'adresse MAC de destination de la trame de données Ethernet n'est pas trouvée dans la table d'adresses MAC de station d'anneau, rechercher l'adresse MAC de destination dans une table de correspondance d'une adresse MAC d'hôte et d'une station de RPR,
224) obtenir un mode de transfert de la trame de données d'après un résultat trouvé dans la table de correspondance.

6. Procédé selon la revendication 5, dans lequel l'étape 224) comporte également les étapes consistant à :
51) si l'adresse MAC de destination est trouvée dans la table de correspondance de l'adresse MAC d'hôte et de la station de RPR, encapsuler la trame de données avec le format distant du RPR,
52) si l'adresse MAC de destination n'est pas trouvée de la table de correspondance de l'adresse MAC d'hôte et de la station de RPR, encapsuler la trame de données avec le format local du RPR.

7. Procédé selon la revendication 6, l'étape 51) comportant en outre les étapes consistant à fixer la valeur IDstationDestination dans l'en tête RPR d'après la table de correspondance de l'adresse MAC d'hôte et de la station de RPR, et fixer la valeur IDstationSource dans l'en-tête RPR d'après la table d'adresses MAC de station d'anneau, l'étape 52) comportant en outre l'étape consistant à fixer la trame de données en mode d'acheminement par inondation.

8. Procédé selon la revendication 3, dans lequel l'étape 22) comporte également les étapes consistant à :
225) si l'adresse MAC source et l'adresse MAC de destination de la trame de données Ethernet ne sont pas toutes deux trouvées dans la table d'adresses MAC de station d'anneau, rechercher l'adresse MAC de destination dans la table de correspondance de l'adresse MAC d'hôte et de la station de RPR,
226) si l'adresse MAC de destination n'est pas trouvée dans la table de correspondance de l'adresse MAC d'hôte et de la station de RPR, encapsuler la trame de données avec le format distant du RPR, fixer la valeur IDstationSource
dans l'en-tête RPR d'après la station d'insertion, et fixer la trame de données en mode d'acheminement par inondation.

9. Procédé selon la revendication 1, dans lequel la détermination à l'étape 2) comporte en outre les étapes consistant à :
91) si l'adresse MAC de destination de la trame de données Ethernet n'est pas une adresse de diffusion individuelle, rechercher l'adresse MAC source de la trame de données Ethernet dans la table d'adresses MAC de station d'anneau,
92) obtenir le mode de transfert de la trame de données d'après le résultat trouvé.

10. Procédé selon la revendication 9, dans lequel l'étape 92) comporte en outre les étapes consistant à :
101) si l'adresse MAC source de la trame de données Ethernet est trouvée, encapsuler la trame de données avec le format local du RPR,
102) si l'adresse MAC source de la trame de données Ethernet n'est pas trouvée, encapsuler la trame de données avec le format distant du RPR, et fixer la valeur IDstationSource dans l'en-tête RPR d'après la station d'insertion.

11. Procédé pour mettre en oeuvre un réseau en anneau de paquets résilients, RPR, compatible L2/L3, comportant les étapes consistant à :
111) déterminer, à partir d'un format d'encapsulation d'une trame de données RPR, si un mode de transfert de la trame de données RPR à transférer est un transfert local, transfert L3, ou un transfert distant, transfert L2,
112) convertir la trame de données RPR en une trame de données Ethernet d'après un résultat de la détermination,
113) transférer la trame de données Ethernet convertie.

12. Procédé selon la revendication 11, dans lequel la conversion à l'étape 112) comporte les étapes consistant à :
121) si le mode de transfert de la trame de données RPR est le transfert local, extraire une adresse MAC source et une adresse MAC de destination correspondantes à partir de la trame de données RPR, les recombiner dans la nouvelle trame de données Ethernet, recalculer un contrôle, obtenir une trame de données Ethernet convertie, et transférer la trame de données Ethernet convertie,
122) si le mode de transfert de la trame de données RPR est le transfert distant, retirer un en-tête RPR de la trame de données RPR pour obtenir une trame de données Ethernet, et transférer la trame de données Ethernet.

13. Procédé selon la revendication 12, l'étape 121) comportant en outre les étapes consistant à : si un drapeau d'acheminement par inondation de la trame de données RPR est valide, apprendre une relation de correspondance entre une adresse d'hôte PC source et une adresse de station da RPR, recoder à la fois un élément d'adresse MAC d'hôte et un élément de station de RPR comme valeur AdresseMACsource dans une table de correspondance d'une adresse MAC d'hôte et d'une station de RPR.

14. Procédé selon la revendication 12, l'étape 122) comportant également les étapes consistant à : apprendre une relation de correspondance entre une adresse d'hôte PC source et une adresse de station de RPR source, enregistrer un élément d'adresse MAC d'hôte comme une valeur AdresseMACsource et enregistrer un élément de station de RPR comme valeur IDstationSource dans une table de correspondance d'une adresse MAC d'hôte et d'une station de RPR.

15. Appareil de réseau (930) comportant :
une première interface (910), interconnectée avec d'autres appareils de réseau,
une seconde interface (920), couplée à au moins un hôte,
un module de détermination (931), analysant une adresse de commande d'accès au support, MAC, source et une adresse MAC de destination d'une trame de données provenant de la seconde interface, déterminant s'il faut exécuter un transfert local, transfert L3, ou un transfert distant, transfert L2, pour la trame de données d'après l'adresse MAC source et l'adresse MAC de destination de la trame de données, et délivrant en sortie un premier résultat d'analyse ou un second résultat d'analyse,
un premier module de transfert (932), ré-encapsulant la trame de données avec un format local du RPR d'après le premier résultat d'analyse et transmettant la trame de données à la première interface,
un second module de transfert (933), ré-encapsulant la trame de données avec le format distant du RPR d'après le second résultat d'analyse et transmettant la trame de données à la première interface.

16. Appareil de réseau selon la revendication 15, dans lequel le premier résultat d'analyse est le transfert local IEEE802.17, et le second résultat d'analyse est le transfert distant IEEE802.17, le premier module de transfert (932) suit les règles de transfert local IEEE802.17 pour encapsuler et décapsuler un en-tête de paquet, et le second module de transfert (933) suit les règles de transfert distant IEEE802.17 pour encapsuler et décapsuler un en-tête de paquet.

17. Appareil de réseau selon la revendication 15, dans lequel l'appareil de réseau (930) est un appareil de réseau RPR situé dans un réseau PPR, la première interface (910) est une interface sur anneau, connectée à d'autres appareils de réseau sur le réseau RPR pour recevoir et transmettre des trames de données, la seconde interface (920) est une interface hors anneau, couplée à au moins un hôte.

18. Appareil de réseau selon la revendication 17, dans lequel le module de détermination (931) est un module de détermination de transfert couplé à l'interface sur anneau et à l'interface hors anneau, le premier module de transfert (932) est un module de transfert local couplé à l'interface sur anneau, à l'interface hors anneau et au module de détermination de transfert, et le second module de transfert (932) est un module de transfert distant couplé à l'interface sur anneau, à l'interface hors anneau et au module de détermination de transfert.

19. Appareil de réseau selon la revendication 17, dans lequel la trame de données reçue/transmise par l'interface hors anneau est une trame de données IEEE802.3, la trame de données reçue/transmise par l'interface sur anneau est une trame de données RPR IEEE802.17, et un format d'encapsulation pour le transfert local ou le transfert distant suit la définition de l'IEEE802.17.
